# EUROPÄISCHE PATENTSCHRIFT

(11) **EP 3 943 327 B1**
(45) Veröffentlichungstag und Bekanntmachung des Hinweises auf die Patenterteilung: **04.10.2023**
(21) Anmeldenummer: 21187212.2
(22) Anmeldetag: 22.07.2021
(51) Int. Cl.: B60K 1/04, H01M 50/20, H01M 50/207, H01M 50/224, H01M 50/233, H01M 50/249

(54) **BATTERIETRÄGER AUS LEICHTMETALLPROFILEN MIT KALIBRIERTEN ENDEN SOWIE VERFAHREN ZU DESSEN HERSTELLUNG**
BATTERY CARRIER MADE OF LIGHTWEIGHT METAL PROFILES WITH CALIBRATED ENDS AND METHOD FOR ITS MANUFACTURE
PORTE-BATTERIE COMPOSÉ DE PROFILÉS EN ALLIAGE LÉGER POURVUS D'EXTRÉMITÉS ÉTALONNÉES, AINSI QUE SON PROCÉDÉ DE PRODUCTION

(30) Priorität: 23.07.2020 DE 102020119533
(43) Veröffentlichungstag der Anmeldung: 26.01.2022
(73) Patentinhaber: Benteler Automobiltechnik GmbH, 33102 Paderborn (DE)
(72) Erfinder: Handing, Christian, 33449 Langenberg (DE); Paulsen, Frode, 2819 Gjovik (NO)
(74) Vertreter: Osterhoff, Utz

(56) Entgegenhaltungen:
- DE-A1-102012 223 801
- DE-A1-102018 124 982
- DE-B3-102016 115 647
- US-A- 6 085 854

## Beschreibung

Die vorliegende Erfindung betrifft einen Batterieträger gemäß den Merkmalen in Oberbegriff von Anspruch 1.

Die vorliegende Erfindung betrifft weiterhin ein Verfahren zur Herstellung eines Batterieträgers gemäß den Merkmalen im Anspruch 9.

Heutzutage werden zur Herstellung von Batterieträgern dafür Profile aus Aluminium oder Stahllegierungen als Material für Boden und Wände verwendet, die miteinander gefügt werden und so einen Innenraum zur Aufnahme von Batterien bereitstellen. Der Innenraum wird durch einen Deckel und eine Dichtung fluiddicht verschlossen. Auch der Boden und die Wände aus je einem oder mehreren Profilen sind fluiddicht miteinander verbunden, beispielsweise durch Reibrührschweißen oder Kaltpressfügen.

Aufgrund der großen Abmessungen der Batterieträger von mehreren Quadratmetern ergibt sich bei der Fertigung die Herausforderung, dass Herstelltoleranzen der Profile (Wanddicken, Außenabmessungen etc.) aus einem Strangpressprozess oder im Falle von Stahlmaterial auch aus dem Rollformprozess relativ groß sind, so dass die Kopplung untereinander erschwert ist.

Es werden kostenintensive spanende Bearbeitungen der Fügebereiche, insbesondere der Rahmenprofile durchgeführt, um die großen Toleranzen zu reduzieren beziehungsweise kompensieren. Dabei bewirkt das erforderliche Aufmaß der Profile auch ein höheres Gesamtgewicht, da die Wandstärke höher, als für die Betriebsfestigkeit notwendig gewählt werden muss.

Alternativ ist es bekannt, dass die Profile insbesondere vor dem Fügen in einer Spannvorrichtung bzw. Rahmenlehre zueinander ausgerichtet und in die Fügelage positioniert und sodann gefügt werden. Nachteilig ist dabei das Einbringen von hohen Eigenspannungen, die sich nachteilig auf Haltbarkeit und Crasheigenschaften des Batteriebehälters auswirken können.

Aus der DE 10 2016 115 647 B3 ist ein Batterieträger bekannt, der aus einem einstückig umlaufenden Leichtmetallprofilrahmen hergestellt ist.

Aus der DE 10 2018 124 982 A1 ist ein Verfahren zum Kalibrieren eines metallischen Hohlkammerprofils bekannt.

Aus der DE 10 2012 223 801 A1 ist eine Speicherzelle zur Aufnahme eines Litium-Ionen-Akkumators bekannt, bei welcher ein oben eingesetzter Deckel umlaufend verschweißt wird.

Aufgabe der vorliegenden Erfindung ist es, einen Batterieträger bereitzustellen, der kostengünstig hergestellt werden kann, zugleich eine hohe geometrische Präzision gerade in Verbindungsstellen einzelner Bauteile aufweist sowie optional verbesserte Dichtigkeitseigenschaften erfüllt.

Die zuvor genannte Aufgabe wird erfindungsgemäß mit einem Batterieträger mit den Merkmalen im Anspruch 1 gelöst.

Der verfahrenstechnische Teil wird mit den Merkmalen im Anspruch 9 gelöst.

Vorteilhafte Ausgestaltungsvarianten sind Gegenstand der abhängigen Ansprüche.

Der erfindungsgemäße Batterieträger kann auch als battery tray oder Batteriegehäuse bezeichnet werden. Dieser ist vorzugsweise im Unterflurbereich eines Elektrofahrzeuges, welches nachfolgend auch Elektrokraftfahrzeug genannt werden kann, angeordnet. Der Innenraum eines solchen Batterieträgers ist geeignet zur Aufnahme einer großen Anzahl von Batterien, die elektrische Energie zur Fortbewegung des Elektrofahrzeuges speichern. Diese Batterien können auch Traktionsbatterien genannt werden. Flächenmäßig in Draufsicht weist ein solcher Batterieträger unter Umständen eine Größe von mehr als ein oder mehr als zwei Quadratmetern auf.

Der Batterieträger ist als gebauter Batterieträger bezeichnet. Dies bedeutet, er ist nicht einstückig aus einer Wanne, beispielsweise Blechbauteil, tiefgezogen oder als Kunststoffbauteil hergestellt. Nein, vielmehr weist der Batterieträger einen außen, zumindest teilweise bevorzugt, vollständig umlaufenden Rahmen auf. Der Rahmen ist aus verschiedenen Hohlprofilen hergestellt. Diese Hohlprofile können aus einem Stahlwerkstoff ausgebildet sein und beispielsweise durch Umformen oder insbesondere Rollformen hergestellt worden sein. Besonders bevorzugt ist jedoch der Batterieträger aus Leichtmetallprofilen ausgebildet. Die Leichtmetallprofile sind insbesondere als extrudierte Strangpressprofile hergestellt. Ganz besonders bevorzugt aus einer Aluminiumlegierung. Insbesondere können diese Leichtmetallprofile in ihrem Querschnitt selbst als Mehrkammerhohlprofil ausgebildet sein. Nachfolgend werden die Hohlprofile daher als Leichtmetallprofile bezeichnet, es können jedoch auch Stahlprofile sein.

Weiterhin sieht die Erfindung vor, dass innerhalb des Batterieträgers Streben angeordnet sind. Diese können als Quer- oder Längsstreben ausgebildet sein. Diese Streben dienen zum einen der Versteifung während des Betriebs, jedoch gerade auch im Crashfall. Insbesondere sind die Streben als Querstreben bzw. Längsstreben in dem Batterieträger angeordnet. Die Streben können auch als Unterteilung von einzelnen Aufnahmeräumen für die entsprechenden Fahrzeugbatterien dienen.

Es wird im Nachfolgenden der Begriff Leichtmetallprofil verwendet. Hierunter fällt jedoch im Rahmen dieser Offenbarung auch ein Profilbauteil, das aus Stahl hergestellt wäre. Es kann austauschend dann ohne erneute Wiederholung oder Differenzierung der Begriffe verwendet werden.

Erfindungsgemäß ist nunmehr vorgesehen, dass zumindest ein Leichtmetallprofil in zumindest einem Endbereich geometrisch kalibriert worden ist.

Unter geometrisch kalibriert ist zu verstehen, dass eine plastische dauerhafte Deformation des Leichtmetallprofils im Endbereich vor einem späteren Fügevorgang durchgeführt wurde. Hierdurch wird erreicht, dass der jeweilige Endbereich, welcher mit einem weiteren Bauteil zu Fügen ist, hinsichtlich seiner Querschnittsgeometrie als auch seiner Lagetoleranz präzise angeordnet ist, so dass die Montage mit höherer Präzision erfolgt. Hierdurch können Eigenspannungen in dem Bauteil selbst vermieden werden, da eine Rahmenlehre, welche unter Umständen zum Fügen der Bauteile verwendet wird, nicht noch zusätzlich die einzelnen Bauteile unter Spannung setzt, damit diese gefügt werden können, da eine verbesserte Lagetoleranz sowie Toleranz in der Querschnittsgeometrie bereits erreicht werden, durch das Kalibrieren.

Ein weiterer erfindungsgemäßer Vorteil wird dadurch erreicht, dass das Kalibrieren auch derart durchgeführt, dass an einer Oberseite in einem Endabschnitt eine Fase hergestellt wird. Diese Fase kann insbesondere durch Eindrücken bzw. Verprägen, mithin umformtechnisch hergestellt werden. Die Fase kann jedoch auch spanabhebend durch ein Fräsverfahren hergestellt werden. In der Fase selbst kann bei einem späteren thermischen Fügevorgang die Fügenaht zumindest teilweise angeordnet sein. Somit kann die Fügenaht zweier aneinander grenzender Bauteile bereits vertieft ausgebildet werden und bedarf geringer und/oder zu vernachlässigender Nacharbeit, wenn bereits ein hinreichend präzises thermisches Fügeverfahren, beispielsweise Laserschweißen verwendet wird. Ggf. muss die Fügenaht nur noch nachgeschliffen werden, jedoch nicht aufwendig spanabhebend, beispielsweise durch einen Fräsvorgang zunächst bearbeitet werden.

Durch das Herstellen der Fase sowie einer geometrischen Kalibrierung des gesamten Endabschnittes des Leichtmetallprofils, wird gleichzeitig auch die Qualität der herzustellenden Schweißverbindung verbessert, da diese mit höherer Präzision hergestellt werden kann und nicht noch ggf. Lagetoleranzen der zwei zu fügenden Bauteile ausgleichen muss. Durch reduziertes oder vermiedenes Entfernen von starkem Fügennahtüberstand wird die Belastbarkeit der Naht insgesamt deutlich erhöht.

Insbesondere werden gemäß der vorliegenden Erfindung somit Leichtmetallprofile an den zu verbindenden Endbereichen kalibriert und weiter bevorzugt an ihrer Oberseite, jedoch auch möglich an weiteren Seiten, mit einer Fase versehen, so dass bei einem späteren thermischen Fügevorgang eine höhere geometrische Präzision und ein besseres Ergebnis der Schweißnaht erreicht werden können, bei gleichzeitig verringerter Notwendigkeit der Nacharbeit.

Ebenfalls kann mit der Erfindung beispielsweise auch ein Höhenversatz, zweier benachbarter Leichtmetallprofile im Übergangsbereich in den jeweiligen Endbereichen ausgeglichen werden.

Hierzu wird beispielsweise, insbesondere eine Oberseite während des Kalibrierungsvorganges verprägt, beispielsweise angehoben bzw. herabgedrückt, so dass an der Oberseite des außen umlaufenden Rahmens, insbesondere im Übergangsbereich zweier benachbarter Leichtmetallprofile ein ebener Übergang bereitgestellt wird. Der im weiteren Längsverlauf des Leichtmetallprofils sich dadurch bedingt immer noch ergebende Höhenversatz ist jedoch fließend, bzw. progressiv oder degressiv verlaufend. Im Bereich der Stoßkante zwischen zwei benachbarten Leichtmetallprofilen wäre dieser Höhenversatz jedoch als Stufenversatz ausgebildet, was durch den erfindungsgemäßen Kalibrierungsvorgang vermieden werden kann.

Somit kommt es vor, dass der Endbereich eine abweichende Querschnittsgeometrie gegenüber dem restlichen Längsverlauf des Leichtmetallprofils aufweist. Dies geht aus der plastischen Deformation während des Kalibrierungsvorganges hervor.

Erfindungsgemäß kann somit auf Toleranzausgleichselemente verzichtet werden. Ebenfalls muss kein Schweißrahmen oder eine Schweißlehre verwendet werden, um die Bauteile nicht nur zueinander auszurichten, sondern auch noch in sich zu verspannen, so dass Toleranzen kompensiert würden.

Erfindungsgemäß können somit die Leichtmetallprofile, insbesondere in den Fügebereichen kalibriert werden durch gezielt eingebrachte lokale plastische Verformungen in wenigstens einem Wandabschnitt.

Somit ist insbesondere die Orientierung bzw. Winkellage einer Seitenwand, bezogen auf eine Vertikale unterschiedlich, zu der Orientierung der Seitenwand in einem zu dem Eckbereich angrenzenden Längenabschnitt des gleichen Leichtmetallprofils.

Die Querschnittsform in dem Endbereich des Leichtmetallprofils ist ebenfalls unterschiedlich zu der Querschnittsform des folgenden Längsabschnitts des gleichen Leichtmetallprofils.

Umlaufend kann ein gleicher Querschnitt der Leichtmetallprofile verwendet werden. Es können jedoch auch unterschiedliche Leichtmetallprofile mit voneinander verschiedenen Querschnitten verwendet werden. Beispielsweise können die Rahmenprofile einen anderen, insbesondere größeren Querschnitt haben als die Querschnitte der Streben.

Auch ist es möglich, dass die Querschnitte von zwei Leichtmetallprofilen des Rahmens voneinander verschieden sind. Beispielsweise kann an einer Kopfseite ein im Querschnitt größeres Querschnittsprofil eingesetzt werden in Relation zu den Leichtmetallprofilen der Seitenwände des Batterieträgers.

Weiterer Bestandteil der Erfindung ist ein Verfahren zur Herstellung eines Batterieträgers mit einem zumindest teilweise außen umlaufenden Rahmen aus miteinander thermisch gefügten Leichtmetallprofilen. Bevorzugt wird der Batterieträger mit den vorhergehenden Merkmalen hergestellt.

Das Verfahren umfasst folgende Schritte:
- Bereitstellen von Leichtmetallprofilen,
- Optional Ablängen der Leichtmetallprofile auf die gewünschte Länge,
- endseitiges Kalibrieren zumindest eines Leichtmetallprofiles durch plastisches Umformen,
- wobei die Fase (13) erzeugt wird während des Extrudierens, vor dem endseitigen Kalibrieren oder bevorzugt während des endseitigen Kalibrierens,
- Anordnen von zwei zueinander benachbarten Leichtmetallprofilen und thermisches Fügen in den Endabschnitten.

Das Kalibrieren selber wird bevorzugt mit einem Innenwerkzeug und einem Außenwerkzeug durchgeführt. Bevorzugt wird das Innenwerkzeug hierzu in Längsrichtung in das Leichtmetallprofil zumindest im Endbereich eingeführt. Das Außenwerkzeug wird dann bevorzugt als Presswerkzeug seitlich bzw. von oben respektive unten herangeführt, so dass der Querschnitt plastisch deformiert wird bzw. umgeformt wird.

Die Fase kann während der Umformung umformtechnisch bzw. prägetechnisch ebenfalls ausgebildet werden. Alternativ ist es auch möglich, die Fase durch einen spanabhebenden Vorgang herzustellen. Alternativ kann die Fase auch bereits während des Extrudierens mit hergestellt werden.

Die kalibrierte Fläche ist dann insbesondere ein Fügebereich. Dies ist eine Schweißfläche, kann jedoch auch eine Klebefläche, beispielsweise an einer Seitenwand sein. Der Fügebereich wird dann insbesondere mit einem benachbarten Leichtmetallprofil stumpf stoßend angeordnet und gefügt.

Der kalibrierte Bereich kann nach außen oder nach innen plastisch verformt sein, so dass beispielsweise im Querschnitt ein verjüngter Profilquerschnitt vorliegt. Je nach produziertem Istmaß des Leichtmetallprofils kann jedoch auch der Endbereich aufgeweitet werden.

Im Sinne der Erfindung ist es auch möglich, einen Längsabschnitt, welcher in einem mittleren Bereich des Leichtmetallprofils ausgebildet ist, zu kalibrieren. Dies ist beispielsweise notwendig, um eine Strebe anzubinden. In diesem Falle wird jedoch nicht mit einem Innenwerkzeug als Gegenhalterwerkzeug gearbeitet. Die Kalibrierung findet somit nur mit einem Außenwerkzeug statt.

Weitere Vorteile, Merkmale, Eigenschaften und Aspekte der vorliegenden Erfindung sind Gegenstand der nachfolgenden Beschreibung. Bevorzugte Ausgestaltungsvarianten werden in schematischen Figuren dargestellt. Diese dienen im einfachen Verständnis der Erfindung. Es zeigen:
- Figur 1: einen erfindungsgemäßen Batterieträger in perspektivischer Ansicht,
- Figur 2a und b: zwei verschiedene Kopplungsmöglichkeiten aus dem Stand der Technik bekannt,
- Figur 3: ein erfindungsgemäßer Kalibrierungsvorgang in einem Endbereich eines Leichtmetallprofils,
- Figur 4: die Kopplung zweier benachbarter Leichtmetallprofile in Seitenansicht,
- Figur 5a und b: eine Seitenansicht und Draufsicht gemäß Figur 4 mit einer Fase,
- Figur 6a und b: verschiedene Ausführungsvarianten mit einer Fase,
- Figur 7a, b und c: verschiedene Kalibrierungen eines Endbereichs eines Leichtmetallprofils,
- Figur 8: ein Endbereich zweier benachbarter Leichtmetallprofile in Draufsicht
- Figur 9: ein Leichtmetallprofil in perspektivischer Ansicht,
- Figur 10: eine alternative Ausgestaltungsvariante eines Leichtmetallprofils in perspektivischer Ansicht
- Figur 11: einen Endbereich eines Leichtmetallprofils in Stirnansicht,
- Figur 12: eine perspektivische Ansicht auf einen Rahmen,
- Figur 13a und: b eine Querschnittsansicht sowie eine Draufsicht von der Ausführungsvariante gemäß Figur 4 mit Boden und Deckel sowie eingegliederter Dichtung und
- Figur 14a und b: eine alternative Ausgestaltungsvariante zur Figur 13.

In den Figuren werden für gleiche oder ähnliche Bauteile dieselben Bezugszeichen verwendet, auch wenn eine wiederholte Beschreibung aus Vereinfachungsgründen entfällt.

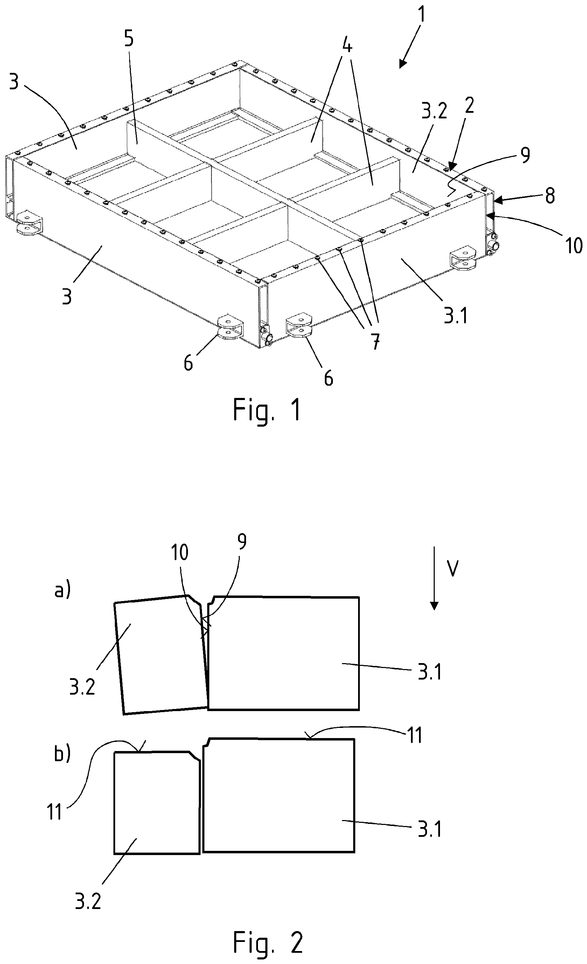

Figur 1 zeigt einen erfindungsgemäßen Batterieträger 1 in perspektivischer Ansicht. Der Batterieträger 1 weist einen außen umlaufenden Rahmen 2 auf. Der Rahmen 2 ist aus vier Leichtmetallprofilen 3 ausgebildet, einem vorderen, einem hinteren und jeweils seitlichen Leichtmetallprofilen 3. Zwischen den seitlichen Leichtmetallprofilen 3 erstrecken sich zwei Querstreben 4. Vom vorderen zum hinteren Leichtmetallprofil 3 erstreckt sich eine Längsstrebe 5. Damit sind innerhalb des Batterieträgers 1 verschiedene Aufnahmeräume für nicht näher dargestellte Batterien gezeigt. Außen umlaufend sind mechanische Anschlüsse 6 gezeigt, mit welchen der Batterieträger 1 in einem Kraftfahrzeug befestigt werden kann. Das Vorhandensein sowie die Anzahl von Längsstrebe(n) bzw. die Anzahl der Querstreben sind im Rahmen der Erfindung variabel und unter anderem von der aufzunehmenden Batterieanzahl und Bauform abhängig.

Erfindungsgemäß sind ferner an der Oberseite Montagepunkte 7 vorgesehen, um einen nicht näher dargestellten Deckel mit dem Batterieträger 1 bzw. der Wanne des Batterieträgers 1 zu koppeln. In einem jeweiligen Endbereich 8 sind zwei zueinander benachbarte Leichtmetallprofile 3 miteinander gekoppelt, was insbesondere mittels thermischem Fügen durchgeführt wird. Das auf die Bildebene bezogen vordere quer verlaufende Leichtmetallprofil 3 ist stumpf an die zwei seitlichen Leichtmetallprofile 3 gekoppelt. Damit nunmehr hier ein Aneinanderliegen der Seitenwand 9 des seitlichen Leichtmetallprofils 3 bzw. der Stirnwand 10 des vorderen Leichtmetallprofils 3 ermöglicht wird, ist zumindest einer, bevorzugt beide Endbereiche 8 der benachbarten Leichtmetallprofile 3 kalibriert.

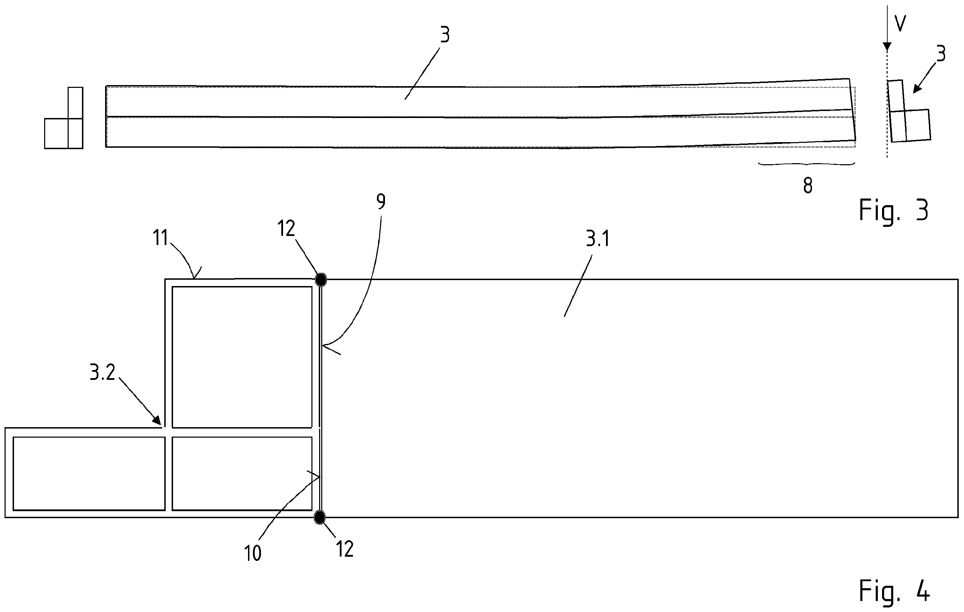

Beim thermischen Fügen können ohne das Kalibrieren Fehlstellungen auftreten, wie sie in Figur 2a bzw. 2b gezeigt sind. Hierbei ist die vordere Seitenwand 9 als Teilauszug des vorderen Leichtmetallprofils 3 mit einem seitlichen Leichtmetallprofil 3 dargestellt. Beispielsweise kann sich wie in Figur 3a im Endbereich 8 des seitlichen Leichtmetallprofils 3 ein Winkelversatz ergeben. Die Seitenwand 9 des seitlichen Leichtmetallprofils 3 steht somit in einem Winkel zu der Stirnwand 10 des vorderen Leichtmetallprofils 3, insbesondere weicht die Lage der Seitenwand 9 somit von einer Vertikalen V ab. In Figur 2b ist ein entsprechender Höhenversatz gezeigt. Eine Oberseite 11 des vorderen Leichtmetallprofils 3 ist höher angeordnet als die Oberseite 11 des Seitenprofils. Wird nunmehr ein Schweißvorgang entweder gemäß Figur 2a entlang der Seitenwand 9 durchgeführt bzw. ein Schweißvorgang auch an der Oberseite 11, so ergibt sich hier ein entsprechender Höhenversatz, der bei Aufsetzen eines nicht näher dargestellten Deckels sind und auch einer dazwischen liegenden Dichtung in dem Übergangsbereich nachteilig auswirkt.

Hier setzt die vorliegende Erfindung an. Ein entsprechendes Leichtmetallprofil 3 wird in seinem Endbereich 8 kalibriert, was dargestellt ist in der durchgezogenen Linie. Die gestrichelte Linie dient der Veranschaulichung eines Auslieferungszustandes, also nach dem Extrudieren. Beim Kalibrieren kann im Längsverlauf des Leichtmetallprofils 3 hier ein plastisches Deformieren des Endbereichs 8 nach oben oder unten bzw. innen oder außen vorgenommen werden, so dass zu einem benachbarten Leichtmetallprofil 3 bei einander Anlegen ein möglichst nahtloser Übergang bereitgestellt wird. Eine Winkellage des rechten Leichtmetallprofils wird ausgeglichen.

Im Rahmen dieser gesamten Offenbarung bezieht sich der Endbereich 8 auf einen Bereich der insbesondere kleiner 20 Prozent der Gesamtlänge des Leichtmetallprofils 3 ausgebildet ist. Bevorzugt betrifft der Endbereich 8 im Wesentlichen den Bereich, in welchem ein weiteres Leichtmetallprofil 3 stumpf gekoppelt ist.

Im Querschnitt kann somit gemäß Figur 4 eine besonders hohe Präzision hergestellt werden. Insbesondere ist das äußere Leichtmetallprofil 3 hier im Querschnitt als L-förmiges Dreikammerhohlprofil dargestellt, an welches dann ein vorderes Leichtmetallprofil 3 stumpf angelegt ist. Die Seitenwand 9 sowie die Stirnseite 10 liegen dabei bündig aneinander oder Winkellage oder dergleichen. Eine nicht näher dargestellte thermische Fügenaht 12 kann somit besonders präzise eingebracht werden. Ferner ist eine oberseitige und unterseitige thermische Fügenaht 12 gezeigt. Die oberseitige thermische Fügenaht 12 würde jedoch gemäß einer Oberseite 11 überstehen.

Ein nicht näher dargestellter Deckel würde somit im Bereich der Fügenaht 12 im oberen Bereich leicht angehoben werden. Es müssten zusätzliche Maßnahmen ergriffen werden, beispielsweise mehr Dichtstoff verwendet werden und/oder die obere Fügenaht 12 spanabhebend bearbeitet werden, so dass eine im Wesentlichen plane Oberfläche ausgebildet wird.

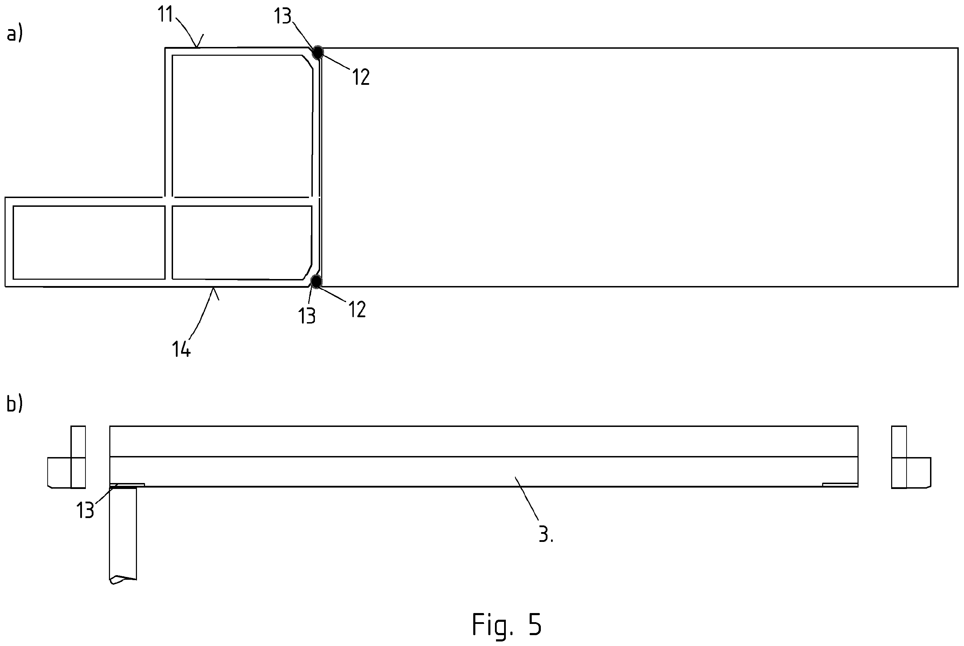

Hierzu ist in einer weiteren vorteilhaften Ausgestaltungsvariante der Erfindung gemäß Figur 5a und 5b vorgesehen, dass eine Fase 13 partiell ausgebildet, insbesondere eingepresst ist. In dieser Fase 13 ist dann die Fügenaht 12 angeordnet. Hierdurch wird erfindungsgemäß als Vorteil erreicht, dass die Fügenaht 12 bereits nach innen versetzt bzw. auf die Oberseite 11 gesehen, nach unten versetzt ist. Dies führt dazu, dass die Fügenaht 12 nicht mehr bzw. in einem zu vernachlässigenden Maß über die Oberseite 11 hervorsteht. Bei Anlegen einer Dichtung oder Dichtstoffes zur Montage eines Deckels ist es somit möglich, bei nur geringer oder ohne Nacharbeit einen entsprechenden Deckel zu montieren.

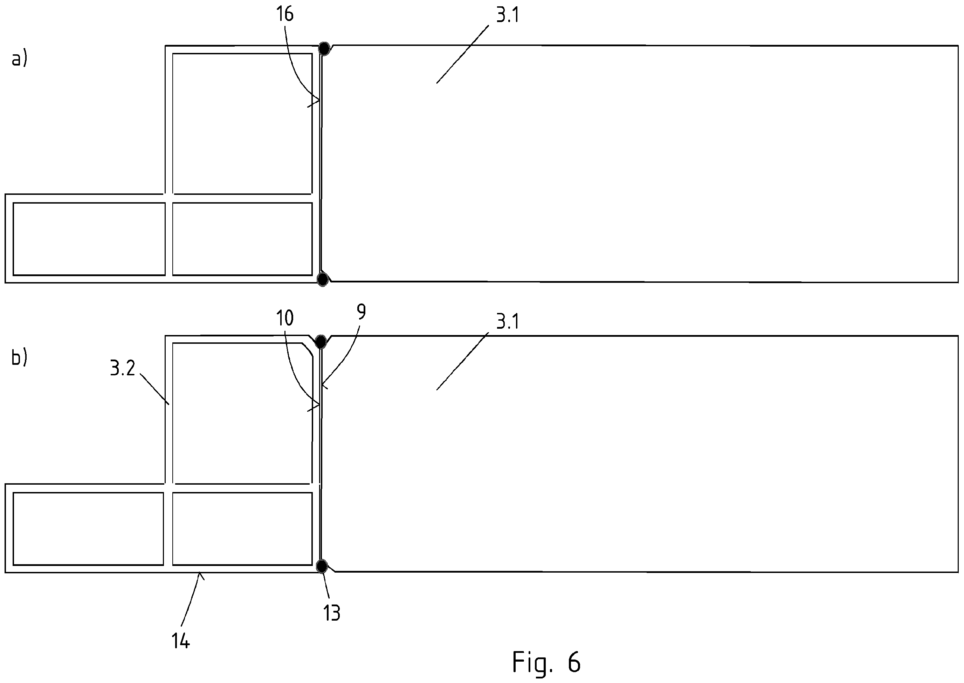

Die Fase 13 ist hier ausgebildet gemäß Figur 5a und 5b im Endbereich 8 des Leichtmetallprofils 3. Die Fase 13 ist ausgebildet an einer Oberseite 11 und auch an einer Unterseite 14. Gemäß Figur 6a und b kann die Fase 13 auch, in Figur 6a gezeigt, an der Stirnseite 10 des Leichtmetallprofils 3 ausgebildet sein. Alternativ gemäß Figur 6b auch sowohl an der Seitenwand 9 als auch an der Stirnseite des jeweiligen Leichtmetallprofils 3. Auch kann, wie auch an der Unterseite in Figur 6b gezeigt, die Fase 13 nur dann an der Stirnseite eines Profils angeordnet sein, wobei an der Oberseite 11 sowohl an der Seitenwand 9 als auch an der Stirnseite 10 des jeweiligen Leichtmetallprofils 3 eine entsprechende Fase 13 angeordnet ist zur Aufnahme einer entsprechenden thermischen Fügenaht 12.

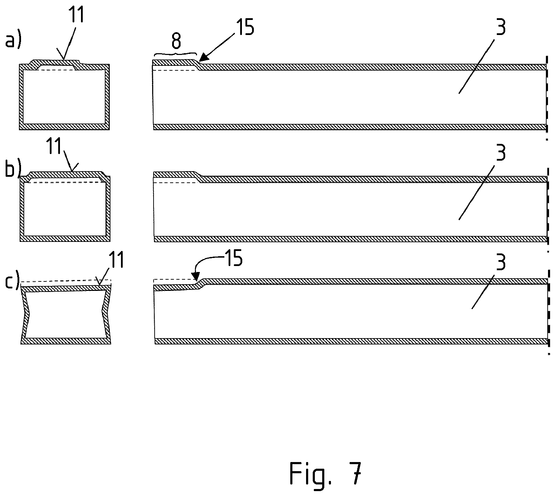

Figur 7a, b und c zeigt eine jeweilige Seiten- und Querschnittansicht eines Leichtmetallprofils 3. In Figur 7a ist eine Oberseite 11 im Endabschnitt kalibriert worden, indem die Oberseite 11 nach oben ausgeformt. Ein entsprechender Übergangsbereich 15 kann dann hier linear abfallend ausgebildet sein. Bei einem stoßseitigen Koppeln fällt dieser somit nicht als Stufenabsatz wie in Figur 2 dargestellt, aus. Im Querschnitt gemäß Figur 7a ist die Ausprägung nach oben gemäß durchgezogener Linie nur partiell in einem Bereich ausgeführt. Gemäß Figur 7b erfolgt die Ausprägung nach oben nahezu über die gesamte Breite des Querschnitts. Gemäß Figur 7c ist die Oberseite 11 eines Endabschnitts flacher gedrückt worden, so dass der Querschnitt sich verringert. Hinsichtlich einer möglichen Auflagefläche für einen anzusetzenden Deckel ergibt sich wiederum ein Vorteil, dass ein Stufenabsatz am Übergang 15 zu einem nicht näher dargestellten weiteren Profil vorhanden wäre. In den Beispielen gemäß Figur 7 sind die Fasen nicht gezeigt, können aber beispielsweise wie in Figur 6 zusätzlich ausgebildet sein.

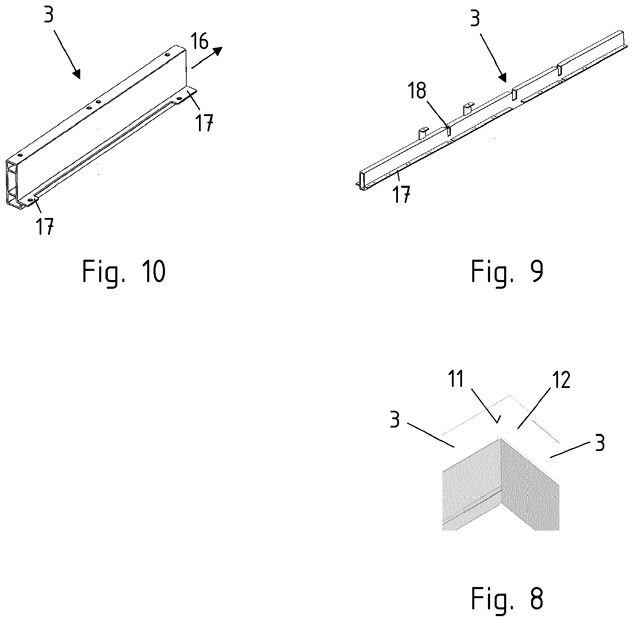

Gemäß Figur 8 kann somit an der Oberseite 11 zweier aneinander grenzender Leichtmetallprofile 3 eine entsprechend thermische Fügenaht 12 ausgebildet werden, ohne dass diese über die Oberseite 11 stehend ist. Es ergibt sich somit eine im Wesentlichen durchgehende Fläche zur Auflage eines nicht näher dargestellten Deckels. Das Gleiche gilt hier für die Unterseite. Erkennbar ist auch, dass die Fase 13 nur im Endbereich 8 ausgebildet ist als lokale Verprägung. Alternativ kann im Rahmen der Erfindung die Fase 13 auch durchgehend beim Herstellen des Ausgangsprofils mit extrudiert sein, anstelle der nur lokalen Einprägung.

Die Leichtmetallprofile 3 können gemäß Figuren 9 bis 10 in ihrem Längsverlauf 16 weitere Fügeflansche oder Aussparungen aufweisen. Auch kann ein Mittelbereich 18, wie beispielsweise in Figur 9 dargestellt, kalibriert werden. Dieser Mittelbereich wird dann vorzugsweise nur von außen kalibriert, jedoch in seiner Lage, für z. B. anzusetzenden Mittelstrebe oder ähnliches entsprechend geometrisch präzise bereitgestellt, so dass eine Verschweißung möglich ist.

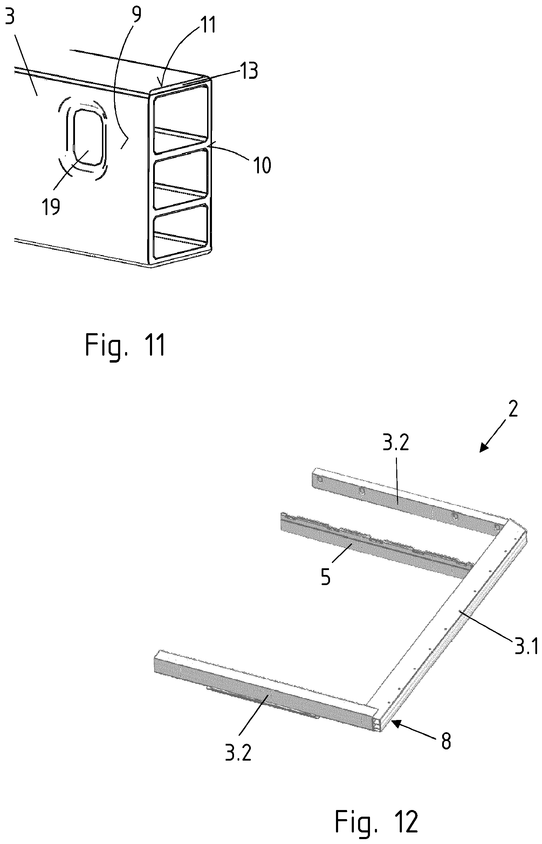

Figur 11 zeigt ein Endbereich bzw. eine Stirnseite 10 als entsprechendes Leichtmetallprofil 3. Hier ist die Fase 13 nur im Bereich der Stirnseite 10 ausgebildet. Zusätzlich ist eine weitere Einprägung in der Seitenwand 9 vorgenommen worden.

Diese Einprägung kann beispielsweise auch während des Kalibrierprozesses eingebracht werden, beispielsweise zur Fixierung von Innenverstärkungen oder anderen Einsatzbauteilen im Leichtmetallprofil 3.

Figur 12 zeigt eine Anordnung zur Herstellung eines Rahmens für einen Batterieträger 1. Hierbei ist ein vorderseitiges Leichtmetallprofil 3 vorgesehen. In das Leichtmetallprofil 3 ist eine Längsstrebe 5 eingesetzt, sowie zwei seitliche Leichtmetallprofile 3. Hierzu ist ein Endbereich 8 des vorderen Leichtmetallprofils 3 ausgeklinkt mit einem rechteckigen Querschnitt, so dass das vordere seitliche Leichtmetallprofil 3 in diesen Endbereich 8 eingesetzt ist. Auch hier kann eine entsprechende Kalibrierung stattfinden, so dann ein nicht näher dargestelltes thermisches Fügen ermöglicht wird.

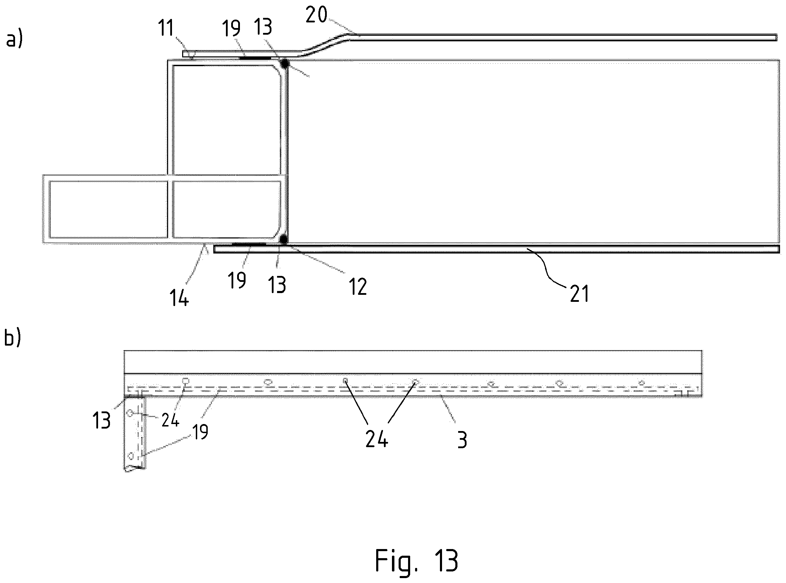

Figur 13a und b zeigen eine Längsschnittansicht sowie eine Draufsicht analog zur Figur 4. Auf der Oberseite 11 ist ein Deckel 20 aufgesetzt. An der Unterseite 14 ist ein Boden 21 angesetzt. Jeweils eingegliedert ist eine Dichtung 19, beispielsweise in Form eines Dichtstreifens oder auch einer Dichtmasse. Hierbei wird der Vorteil der Erfindung nochmals sichtbar. In der Fase 13 versenkten Fügenaht 12 ist im Wesentlichen keine Nacharbeit notwendig, nachdem der umlaufende Rahmen gekoppelt ist. Boden 21 und Deckel 20 können angesetzt werden und liegen nahezu plan auf der Oberseite 11 bzw. der Unterseite 14 an unter Einlegung der Dichtung 19, so dass auch in der Großserienproduktion eine hinreichende Genauigkeit in Bezug auf die Dichtigkeit des Batteriekastens bzw. Batterieträgers 1 sichergestellt ist.

Die Bodenlage selbst könnte beispielsweise auch dicht geschweißt werden. Figur 13b zeigt eine Draufsicht. Hierbei ist eine jeweilige Verschraubung 24 dargestellt, so dass beispielsweise der Deckel 20 gemäß Draufsicht aufgesetzt sein kann.

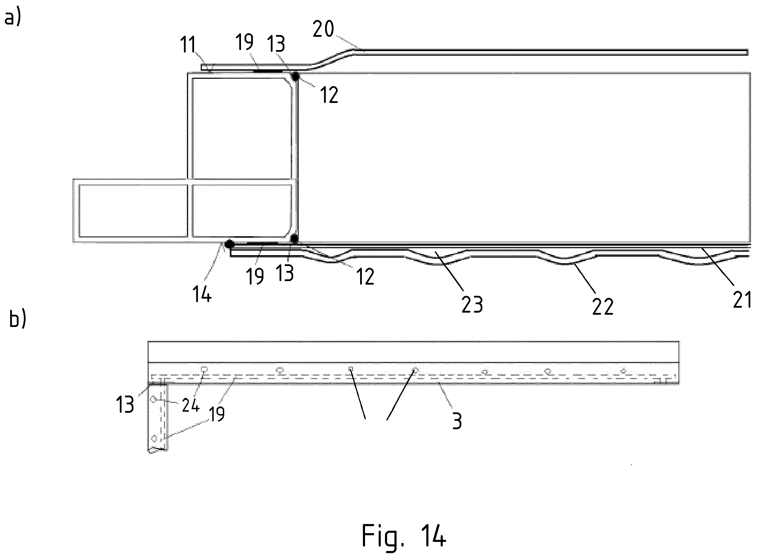

Figur 14a und b zeigt eine analoge Ausführungsvariante zur Figur 13a und b. In Ergänzung zur Figur 13 ist ein Kühlboden ausgebildet. Der Boden 21 ist als Bodenblech ausgebildet. Hieran angesetzt ist ein Lamellenblech 22 mit Sicken bzw. Ausprägungen. Hierdurch werden zwischen Boden 21 und Lamellenblech 22 Kühlkanäle 23 gebildet. Das Lamellenblech 22 und das Bodenblech können gelötet oder auch dicht geschweißt sein, so dass eine kanalbehaftete Doppelblechlage ausgebildet ist.

### Bezugszeichen:

- 1 -: Batterieträger
- 2 -: Rahmen
- 3 -: Leichtmetallprofil
- 4 -: Querstrebe
- 5 -: Längsstrebe
- 6 -: Anschluss
- 7 -: Montagepunkt
- 8 -: Endbereich zu 3
- 9 -: Seitenwand zu 3
- 10 -: Stirnseite zu 3
- 11 -: Oberseite
- 12 -: Fügenaht
- 13 -: Fase
- 14 -: Unterseite
- 15 -: Übergangsbereich
- 16 -: Längsverlauf
- 17 -: Flansch
- 18 -: Mittelbereich
- 19 -: Dichtung
- 20 -: Deckel
- 21 -: Boden
- 22 -: Lamellenblech
- 23 -: Kühlkanal
- 24 -: Verschraubung
- V -: Vertikalrichtung/Vertikale

## Patentansprüche

1. Batterieträger (1) für ein Elektrofahrzeug, aufweisend eine Wanne mit einem Rahmen (2) und/oder in der Wanne verlaufenden Streben (4, 5), wobei der Rahmen (2) und/oder die Streben (4, 5) aus Hohlprofilen, als extrudierte Leichtmetallprofile (3) hergestellt sind, welche mittels stoffschlüssigem Fügen verbunden sind, und auf einer Oberseite (11) des Leichtmetallprofils ein Deckel gekoppelt ist, **dadurch gekennzeichnet, dass** zumindest ein Leichtmetallprofil (3) an einem Endabschnitt geometrisch kalibriert worden ist, dergestalt, dass der Endabschnitt eine abweichende Querschnittsgeometrie gegenüber dem restlichen Längsverlauf des Leichtmetallprofils aufweist und an einer Oberseite (11) zumindest abschnittsweise eine Fase (13) aufweist, wobei die thermische Fügenaht (12) in der Fase (13) angeordnet ist.

2. Batterieträger (1) nach Anspruch 1, **dadurch gekennzeichnet, dass** in einem Eckbereich des Rahmens (2) zwei benachbarte Leichtmetallprofile (3) stumpf aneinander anliegen, wobei an der Oberseite (11), mindestens an einem Leichtmetallprofil (3) eine Fase (13) ausgebildet ist, in welcher eine Schweißnaht vertieft angeordnet ist.

3. Batterieträger (1) nach Anspruch 1 oder 2, **dadurch gekennzeichnet, dass** in einem Endbereich (8) eine Seitenwand (9) des Rahmens (2) des Leichtmetallprofils (3) verformt ist.

4. Batterieträger (1) nach einem der Ansprüche 1 bis 3, **dadurch gekennzeichnet, dass** in einem Endbereich (8) eine Oberwand und Unterwand eines Leichtmetallprofils (3) verformt sind.

5. Batterieträger (1) nach einem der Ansprüche 1 bis 4, **dadurch gekennzeichnet, dass** in einem Endbereich (8) die Orientierung zu einer Vertikalen (V) der Seitenwand (9) durch das Kalibrieren unterschiedlich ist, in Relation zu der Orientierung der Seitenwand (9) in einem zu dem Endbereich (8) angrenzenden Längenabschnitt.

6. Batterieträger (1) nach einem der Ansprüche 1 bis 5, **dadurch gekennzeichnet, dass** ein Leichtmetallprofil (3) in Draufsicht eine rechteckförmige Aussparung aufweist, dergestalt, dass ein benachbartes Leichtmetallprofil (3) in die Aussparung eingesetzt ist.

7. Batterieträger (1) nach einem der Ansprüche 1 bis 6, **dadurch gekennzeichnet, dass** zwei benachbarte Leichtmetallprofile (3) voneinander verschiedene Querschnitte aufweisen.

8. Batterieträger (1) nach einem der Ansprüche 1 bis 7, **dadurch gekennzeichnet, dass** eine Fase (13) an einer Stirnkante und/oder einer äußeren Längskante des Endabschnittes ausgebildet ist.

9. Verfahren zur Herstellung eines Batterieträgers (1), mit einem außen zumindest teilweise umlaufenden Rahmen (2) aus miteinander thermisch gefügten Leichtmetallprofilen (3), insbesondere nach Anspruch 1, mit folgenden Verfahrensschritten:
• Bereitstellen von Leichtmetallprofilen (3),
• Optional Ablängen der Leichtmetallprofile (3) auf die gewünschte Länge,
• Endseitiges Kalibrieren zumindest eines Leichtmetallprofiles (3) durch plastisches Umformen, dergestalt, dass der Endabschnitt eine abweichende Querschnittsgeometrie gegenüber des restlichen Längsverlaufes des Leichtmetallprofils aufweist und an einer Oberseite (11) zumindest abschnittsweise eine Fase (13) aufweist, wobei die thermische Fügenaht (12) in der Fase (13) angeordnet ist.
• wobei die Fase (13) erzeugt wird während des Extrudierens, vor dem endseitigen Kalibrieren oder bevorzugt während des endseitigen Kalibrierens,
• Anordnen von zwei zueinander benachbarten Leichtmetallprofilen (3) und thermisches Fügen in den Endabschnitten,

10. Verfahren nach Anspruch 9, **dadurch gekennzeichnet, dass** das Kalibrieren mit einem Innenwerkzeug und einem Außenwerkzeug durchgeführt wird, welche bevorzugt in Längsrichtung in das Leichtmetallprofil (3) eingeführt sind.

## Claims

1. Battery carrier (1) for an electric vehicle, having a trough with a frame (2) and/or struts (4, 5) extending in the trough, wherein the frame (2) and/or the struts (4, 5) are produced from hollow profiles, as extruded light metal profiles (3), which are connected by means of material-bonded joining, and a cover is coupled to an upper side (11) of the light metal profile, **characterised in that** at least one light metal profile (3) has been calibrated geometrically at one end section such that the end section has a different cross-sectional geometry from the rest of the longitudinal extension of the light metal profile and has a chamfer (13) on an upper side (11) at least in sections, wherein the thermal joining seam (12) is arranged in the chamfer (13).

2. Battery carrier (1) according to claim 1, **characterised in that** two adjacent light metal profiles (3) abut against one another in a corner region of the frame (2), wherein a chamfer (13) is formed on the upper side (11), at least on one light metal profile (3), into which chamfer a weld seam is recessed.

3. Battery carrier (1) according to claim 1 or 2, **characterised in that** a side wall (9) of the frame (2) of the light metal profile (3) is deformed in an end region (8).

4. Battery carrier (1) according to any one of claims 1 to 3, **characterised in that** a top wall and bottom wall of a light metal profile (3) are deformed in an end region (8).

5. Battery carrier (1) according to any one of claims1 to 4, **characterised in that** in an end region (8) the orientation to a vertical (V) of the side wall (9) is different by the calibration in relation to the orientation of the side wall (9) in a longitudinal section adjacent to the end region (8).

6. Battery carrier (1) according to any one of claims 1 to 5, **characterised in that** a light metal profile (3) has a rectangular recess in plan view such that an adjacent light metal profile (3) is inserted into the recess.

7. Battery carrier (1) according to any one of claims 1 to 6, **characterised in that** two adjacent light metal profiles (3) have different cross-sections.

8. Battery carrier (1) according to any one of claims 1 to 7, **characterised in that** a chamfer (13) is formed on a front edge and/or an outer longitudinal edge of the end section.

9. Method for producing a battery carrier (1), with an externally at least partially peripheral frame (2) made of thermally joined light metal profiles (3), in particular according to claim 1, having the following method steps:
- providing light metal profiles (3),
- optionally cutting the light metal profiles (3) to the desired length,
- end-side calibration of at least one light metal profile (3) by plastic deformation, such that the end section has a different cross-sectional geometry from the rest of the longitudinal extension of the light metal profile and on an upper side (11) has a chamfer (13) at least in sections, wherein the thermal joining seam (12) is arranged in the chamfer (13).
- wherein the chamfer (13) is produced during the extrusion before the end-side calibration or preferably during the end-side calibration,
- arranging two adjacent light metal profiles (3) and thermally joining them at the end sections.

10. Method according to claim 9, **characterised in that** the calibration is performed with an inner tool and an outer tool, which are preferably introduced into the light metal profile (3) in longitudinal direction.

## Revendications

1. Support de batterie (1) destiné à un véhicule électrique, présentant une cuve dotée d'un cadre (2) et/ou des entretoises longitudinales (4, 5) s'étendant dans la cuve, dans lequel le cadre (2) et/ou les entretoises (4, 5) est(sont) fabriqué(e)(s) à partir de profilés creux, comme profilés en métal léger (3) extrudés, lesquels sont reliés au moyen d'un assemblage par liaison de matière, et un couvercle est couplé sur une face supérieure (11) du profilé en métal léger, **caractérisé en ce qu'**au moins un profilé en métal léger (3) a été étalonné géométriquement sur une partie d'extrémité, de telle manière que la partie d'extrémité présente une géométrie en section transversale différente par rapport au reste de l'étendue longitudinale du profilé en métal léger et présente un chanfrein (13) au moins par sections sur une face supérieure (11), dans lequel la soudure d'assemblage thermique (12) est disposée dans le chanfrein (13).

2. Support de batterie (1) selon la revendication 1, **caractérisé en ce que** dans une zone d'angle du cadre (2) deux profilés en métal léger (3) adjacents s'aboutent l'un contre l'autre, dans lequel sur la face supérieure (11), un chanfrein (13) est conçu au moins sur un profilé en métal léger (3), dans lequel une couture soudée est disposée en profondeur.

3. Support de batterie (1) selon la revendication 1 ou 2, **caractérisé en ce qu'**une paroi latérale (9) du cadre (2) du profilé en métal léger (3) est déformée dans une zone d'extrémité (8).

4. Support de batterie (1) selon l'une quelconque des revendications 1 à 3, **caractérisé en ce qu'**une paroi supérieure et une paroi inférieure d'un profilé en métal léger (3) sont déformées dans une zone d'extrémité (8).

5. Support de batterie (1) selon l'une quelconque des revendications 1 à 4, **caractérisé en ce que** l'orientation par rapport à une verticale (V) de la paroi latérale (9) est différente dans une zone d'extrémité (8) en raison de l'étalonnage, par rapport à l'orientation de la paroi latérale (9) dans une section longitudinale adjacente à la zone d'extrémité (8).

6. Support de batterie (1) selon l'une quelconque des revendications 1 à 5, **caractérisé en ce qu'**un profilé en métal léger (3) présente dans une vue en plan un évidement rectangulaire, tel qu'un profilé en métal léger (3) adjacent est inséré dans l'évidement.

7. Support de batterie (1) selon l'une quelconque des revendications 1 à 6, **caractérisé en ce que** deux profilés en métal léger (3) adjacents présentent des sections transversales différentes les unes des autres.

8. Support de batterie (1) selon l'une quelconque des revendications 1 à 7, **caractérisé en ce qu'**un chanfrein (13) est conçu sur une arête frontale et/ou une arête longitudinale extérieure de la section d'extrémité.

9. Procédé de fabrication d'un support de batterie (1), avec un cadre (2) extérieur au moins partiellement périphérique à partir de profilés en métal léger (3) assemblés thermiquement entre eux, en particulier selon la revendication 1, comprenant les étapes de procédé suivants :
- fourniture de profilés en métal léger (3),
- tronçonnage facultatif des profilés en métal léger (3) de longueur souhaitée,
- étalonnage côté extrémité d'au moins un profilé en métal léger (3) par déformation plastique, tel que la section d'extrémité présente une géométrie en section transversale différente par rapport au reste de l'étendue longitudinale du profilé en métal léger et présente un chanfrein (13) au moins par sections sur une face supérieure (11), dans lequel la soudure d'assemblage thermique (12) est disposée dans le chanfrein (13).
- dans lequel le chanfrein (13) est produit pendant l'extrusion, avant l'étalonnage côté extrémité ou de préférence pendant l'étalonnage côté extrémité,
- agencement de deux profilés en métal léger (3) adjacents l'un à l'autre et assemblage thermique dans les sections d'extrémité.

10. Procédé selon la revendication 9, **caractérisé en ce que** l'étalonnage est réalisé avec un outil interne et un outil externe, lesquels sont introduits de préférence dans la direction longitudinale dans le profilé en métal léger (3).
